# EUROPEAN PATENT APPLICATION

(11) **EP 2 482 049 A1**
(43) Date of publication of application: **01.08.2012**
(21) Application number: 11152778.4
(22) Date of filing: 31.01.2011
(51) Int. Cl.: G01J 5/02, G01J 5/06, G01J 5/08

(54) **IR thermometer baffles**

(71) Applicant: Microlife Intellectual Property GmbH, 9443 Widnau (CH)
(72) Inventor: Ho, Chia-Chen, Taipei City (TW)
(74) Representative: Hepp Wenger Ryffel AG

(57) **Abstract**

The present invention relates to an infrared thermometer (20), particularly adapted for reading the temperature of a patient on the forehead. The infrared thermometer comprises a housing, a sensor (4) element for sensing infrared radiation and means for converting sensed infrared radiation into an electrically usable signal. The infrared thermometer further comprises a baffle (3) for shielding the sensor (4) element from undesired infrared radiation. The baffle (3) is of an essentially cylindrical, tubular shape with a first opening for facing the source where the temperature is to be taken from and a second opening for facing the sensor element. The baffle (3) further has an inner surface adapted to prevent reflection of infrared radiation along its inner surface on to the (4) sensor element.

## Description

The present invention relates to infrared thermometers with infrared sensors and in particular to infrared thermometers adapted for measuring the temperature of a patient on the forehead. The present invention further relates to infrared thermometer baffles, the use of an infrared thermometer and methods for measuring the temperature, particularly the temperature of a patient, all according to the preambles of the independent claims.

Infrared thermometers have become a widespread alternative to conventional thermometers requiring taking the body temperature of a patient by direct contact with the tissue. Infrared thermometers are generally capable of detecting the temperature of a patient based on an infrared emission generated by a part of the body surface of the patient.

Infrared thermometers most commonly comprise a sensing element which collects the infrared radiation emitted by the particular part of the body surface. Such thermometers are most commonly placed at a predetermined location in a predetermined distance from the surface for providing accurate readings. Locations usable for carrying out an infrared temperature reading are for example the ear-drum, the temporal artery or the forehead. The structural design of the thermometer is usually adapted to read the temperature from a specific location.

A thermometer adapted for reading the temperature at the ear-drum of a patient might feature an elongated tip for introduction into the patient's ear, whereas a thermometer adapted to read the patient's temperature from the forehead might comprise a flattened tip that can be placed on the forehead, for instance.

For accuracy of readings, it is essential that the sensing element is reached by the infrared emissions of the specific spot where temperature is to be taken from. At the same time, infrared emission from other sources should be prevented. Furthermore, as the thermometers are usually adapted to calculate and derive the temperature accurately only from the location for which they are either predetermined or, if variable, chosen for, infrared radiation from other spots of the human body than the predetermined spot where temperature is to be taken from is to be prevented from reaching the sensing element.

For maximizing the accuracy of the infrared thermometer the reading spot should be as definite as possible. This is particularly important for so-called non-contact thermometers where the area of the spot considered may depend from the distance of the thermometer to the spot.

One possible way of preventing extraneous infrared emission to reach the sensor, and to keep the spot where temperature is read as definite as possible, is providing a waveguide positioned before the sensing element for limiting the field of view.

The prior art suggests alternative solutions, such as to provide the sensing element with a funnel that either collects or reflects infrared radiation, depending on the sensitivity of the sensing element. EP 1 283 983 B1 suggest the use of a funnel-like waveguide with an inner surface with a converging region. The geometry of the inner surface is designed, such as to essentially guide infrared radiation from other spots than the predetermined reading spot away from the sensing element.

Still such a funnel requires a complicated geometry, is difficult and expensive to produce and might lack durability if the reflective inner surface suffers from scratches or material defects.

It is therefore an object of the present invention to solve the problems of the prior art. It is particularly an object to provide a reliable, easy to manufacture infrared thermometer which can perform accurate non-contact temperature measurements on a predetermined reading spot of the patient that is less prone to reading errors due to extraneous infrared radiation.

This object is solved with an infrared thermometer, an infrared thermometer baffle, the use of an infrared thermometer and a method for measuring the temperature according to the independent claims.

One aspect of the present invention is an infrared thermometer. The infrared thermometer is preferably adapted for measuring the temperature of a patient on a predetermined reading spot, preferably on the forehead of a human or animal being. The infrared thermometer comprises a housing. Suitable housing materials can be plastic and/or metal, such as aluminium. The housing can be adapted for a multitude of application areas, such as home use, hospital use or doctor's practice. Preferably the housing is of a size and shape, such as to enable operation of the infrared thermometer in a hand-held manner. The housing can be formed to provide for a grip area, where the infrared thermometer is held and a sensor area, which is pointed towards or placed near to or on the surface where the predetermined sensing spot is located. The infrared thermometer further comprises a sensor element for sensing infrared radiation. Such sensing elements can for instance be thermopile elements, e. g. absorption elements, which feature the capability of absorbing radiation independently from its wave lengths and become warmer upon being subjected to infrared radiation. The infrared thermometer further comprises means for converting sensed infrared radiation into an electrically usable signal. Preferably the warming of a sensor element upon being subjected to infrared radiation is translated into an electrically usable signal. Means for converting sensed infrared radiation into an electrically usable signal are known in the art. In a particular embodiment, a bolometer, pyrometer and/or thermopile can be used to measure a change in the electrical resistance or alternatively the voltage can be measured between thermo elements. Preferably such infrared sensing elements and means for converting sensed infrared radiation into an electrically usable signal are sufficiently miniaturized for fitting into a hand-held infrared thermometer. Suitable sensor elements and means for converting sensed infrared radiation into an electrically usable signal are e. g. shown in DE 103 21 639 A1. The document shows a temperature sensing element comprising an absorbing element which absorbs radiation and thereby becomes warmer and a carrier element, which carries the absorber elements, further comprising openings such as to prevent the absorber elements at least in part to come into contact with the carrying element.

The infrared thermometer further comprises a baffle for shielding the sensor element from undesired, respectively extraneous infrared radiation. Such a baffle can be located at a distal end of the infrared thermometer, whereby distal, is to be understood as the end intended to be directed towards the patient. The baffle is of an elongated, essentially cylindrical, essentially tubular shape with a first opening for facing the source, i. e. the predetermined sensing spot, and a second opening facing the sensor element. In the context of the present invention, undesired or extraneous infrared radiation is radiation originating from a source other than the predetermined sensing spot. This can be a patient source, or ambient source, for instance.

The baffle further has an inner surface that is adapted to essentially prevent reflection of infrared radiation along its inner surface onto the sensor element. The baffle thus prevents infrared radiation from sources other than the predetermined sensing spot (e. g. an undesired or extraneous infrared radiation) from reaching the sensor element. The inner surface of the baffle can either be coated with a coating or treated in a manner that prevents reflection of infrared radiation or essentially comprise or consist of a material that prevents infrared radiation along its inner surface.

In the context of the present invention, to essentially prevent reflection of infrared radiation along its inner surface can be understood as limiting the amount of extraneous infrared radiation reaching the sensing element to a negligible fraction.

A shielding of the infrared radiation stemming from angles of incidence above a particular threshold can be achieved either by substantially or fully absorbing the infrared radiation at the point of impact on the inner surface of the baffle, or by partly absorbing the infrared radiation at said point and reflecting it at least in part to a further point of impact on the inner surface where another part of the infrared radiation is absorbed. This can be repeated such as to prevent the infrared radiation stemming from an angle of incidence above a certain threshold to reach the sensor element.

In a preferred embodiment, the length of the baffle is adapted, such as to prevent infrared radiation stemming from angles of incidence above a certain threshold from directly impeding the cursor element.

In a preferred embodiment, the inner surface of the sensor element is coated with a coating that is adapted to absorb all, or substantially all infrared radiation. Any coating with an IR absorbing characteristic is conceivable for this end. The baffle is preferably made from metal, or a metal alloy, which can be electroplated in any colour - as long as electroplating provides adequate infrared absorption. One particular example that has been found suitable is electroplated copper. Methods for producing electroplated copper are known in the art. Another example that has been found particularly suitable is black velvet (3M) coating, which can be applied by spraying. A process and body with extremely low electromagnetic radiation reflectance is described in US4111762 (A). The coating can also provide an essentially porous and/or structured inner surface to achieve the same end.

In a further preferred embodiment, the baffle comprises aluminium and has a black anodized inner surface.

In a preferred embodiment the baffle does not include any lens along its length. Even more preferably, there is no lens closer to the first opening of the baffle than to the second opening of the baffle.

In a preferred embodiment, the baffle has an inner diameter of from 2 to 10 mm, preferably of from 4 to 6 mm, even more preferably of 5.5 mm. In a further preferred embodiment, the baffle has an outer diameter suitable for use in a hand held infrared thermometer for measuring infrared radiation on a predetermined spot on the surface of a patient, in particular of from 2 to 15 mm, preferably of from 3 to 10 mm, even more preferably of from 5 to 8 mm, more preferably of about 5.1 mm.

In a further preferred embodiment, the baffle has a length of from 4 to 30 mm, preferably of from 8 to 20 mm, more preferably of about 16 mm. The length of the baffle in this context refers to an integral part which may comprise a front section used to shield radiation and a back section for receiving a sensor. The front part which is used for shielding radiation typically has a length of from 2 to 12 mm, preferably 8 mm.

In a preferred embodiment the baffle is made of a metal or metal alloy.

In a further preferred embodiment, the sensor element is thermally linked with the baffle.

In a further preferred embodiment, the housing further comprises a display means for displaying measured temperature values, mode of use and other information useful and convenient for the practitioner.

An infrared thermometer according to the present invention preferably comprises a baffle that is adapted to allow radiation from the source to reach the sensor element.

In the context of the present invention the source is to be understood as a predetermined sensing spot where the temperature of a patient can be read from.

In a further preferred embodiment, the infrared thermometer is further equipped with processing means for measuring a series of temperature values over time from said spot. The thermometer can either be adapted to provide for the highest reading for display to the operator, or provide a calculated means from the number of readings. The thermometer can be further equipped with processing means that enable the operator to choose from a predetermined number of predetermined sensing spots such as the ear-drum, the forehead or the temporal artery or others.

The thermometer can further be equipped with processing means that take into account from a stored number of measured temperatures the different characteristics of each measuring spot.

In a preferred embodiment, the baffle has an angle of aperture adapted to receive infrared radiation from an essentially smooth surface of a patient whose temperature is to be determined on a spot size of at least 5.5 mm in diameter. In a preferred embodiment, said spot is on the forehead of a patient.

In a preferred embodiment, the infrared thermometer comprises a lens interdisposed between the baffles and the sensor element.

One aspect of the present invention is a sensor arrangement for an infrared thermometer. The sensor arrangement comprises at least one sensor element for sensing infrared radiation, means for converting sensed infrared radiation into an electrically usable signal and a baffle for shielding the sensor element from undesired infrared radiation. The baffle is of an essentially cylindrical, tubular shape. The baffle further comprises at least two openings, a first, distal, opening for facing a source of infrared radiation and a second, proximal, opening for facing the sensor element. The baffle is further adapted to prevent reflection of infrared radiation along its inner surface onto the sensor element. Preferably this is achieved by having an inner surface of the baffle that is adapted to prevent reflection of infrared radiation onto the sensor element. Even more preferably, the inner surface of the baffle has a coating that is adapted to absorb all or substantially all infrared radiation.

The sensor arrangement can be installed in a housing and provides connection means for connecting the sensor arrangement operatively with a chip that translates the measured values into an output.

One further aspect of the present invention is the use of an infrared thermometer according to the present invention for non-invasively measuring the temperature of a patient. Preferably, infrared radiation from a patient's forehead is measured. In use, the infrared thermometer is placed with the baffle opening facing, but not contacting the forehead of a patient.

A further aspect of the present invention is a method for measuring the temperature. Preferably, the temperature of a patient is measured, even more preferably the temperature of a patient is measured by measuring infrared radiation from the patient's forehead. Typically measurements are made by scanning across the forehead in a manner known in the art.

A sensor element is provided for sensing infrared radiation. Further means are provided for converting sensed infrared radiation into an electrically usable signal. An essentially cylindrical, tubular shaped baffle for shielding the sensor element from undesired infrared radiation is further provided, whereby said baffle has a first opening and a second opening. The baffle further preferably is coated on its inner surface, such as to absorb all or substantially all infrared radiation that reaches the inner surface of said baffle.

The first opening is placed such as to face the source of infrared radiation and radiation not originating from said source is prevented to reach the sensor element. This is preferably achieved by preventing reflection of infrared radiation along the inner surface of the baffle onto the sensor element.

The present invention will now be described in further detail by means of specific examples and figures:
- Fig. 1: shows a schematic section view of a sensor arrangement for infrared thermometers,
- Fig. 2: shows an infrared thermometer comprising a sensor arrangement according to the present invention,
- Fig. 3: shows a section view of an alternate sensor arrangement for infrared thermometers.

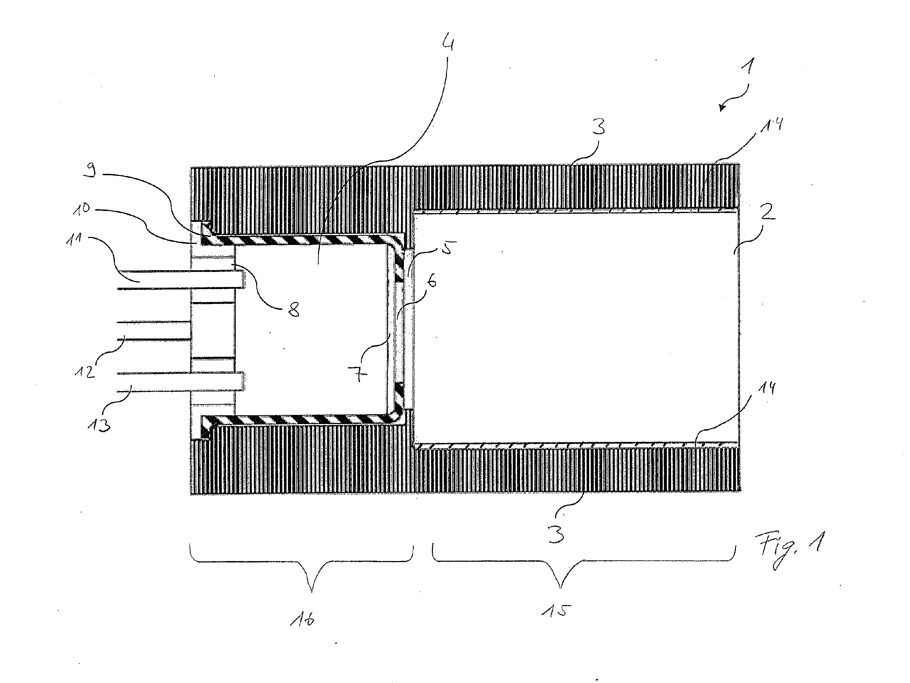

Figure 1 is a schematic section view of a sensor arrangement 1 according to the present invention.

The baffle 3 is constructed from one piece and made of copper. The baffle 3 has a muzzle 2 that faces the predetermined spot, where the temperature is to be read from. The baffle has a cylindrical, essentially tubular shape. Inside the muzzle 2, the baffle walls 14 are coated with a coating that essentially absorbs all infrared radiation. The baffle 3 is organized in two sections, a muzzle, front section 15 facing the patient and a sensor, back section 16 facing a thermometer housing. Both sections, the front section 15 and back section 16 have cylindrical openings, whereby the muzzle 2 is formed by the cylindrical opening of the front section 15 and the back section 16 cylindrical opening is adapted to hold sensor elements.

The sensor arrangement 1 includes a sensor 4 which is commercially available, e. g. the sensor Type M21 of the supplier Heimann Sensor GmbH (DE). The sensor element comprises a thermopile and an infrared sensor (not individually shown).

The sensor 4 is located in a sensor element housing 9 with a sensor element front opening 6 right after the muzzle 2 rear opening 5. A lens 7 is intersected between the sensor element front opening 6 and the sensor 4. The lens 7 can be a conventional glass lens.

The sensor 4 is fitted with a rear plate of the sensor housing 10 and wire fixing 8 on a sensor element back opening. The wire fixing 8 holds a thermistor lead wire 11, a further thermistor lead wire (not shown) and a first infrared sensor lead wire 12 and a second infrared sensor lead wire 13.

The sensor 4 is tightly fitted in an opening of the baffle 3. The baffle 3 has a connection opening 5 linking the opening for receiving the sensor 4 and the muzzle 2 which is intended to let infra radiation pass from the entry opening of the baffle 3 towards the sensor.

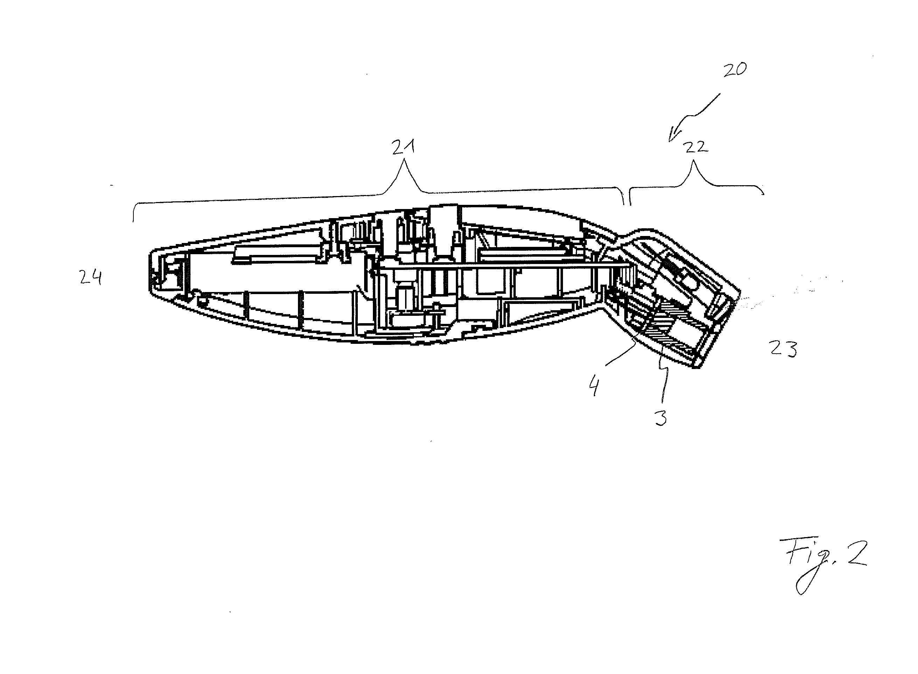

Figure 2 shows an infrared thermometer 20 adapted to measure the temperature of a patient from a predetermined spot on the patients body according to the present invention. The shown infrared thermometer 20 is adapted to measure the temperature from the forehead of a patient. The infrared thermometer 20 is essentially oblong and has a distal end 23 and a proximal end 24, whereby the distal end 23 is aimed or pointed at the predetermined spot and the proximal end 24 faces the user. The infrared thermometer 20 can be roughly subdivided in a head portion 22 holding all the sensing tools and aides as well as the lead wires and electronics thereto and a body section 21, which houses battery/energy source, display means and operation means, such as for example on/off buttons etc.

The head portion 22 further comprises the baffle 3 which is adapted to shield a sensor element 4 from undesired infrared radiation. The baffle 3 is of a cylindrical, tubular shape with a first opening for the distal end 23 of the infrared thermometer 20, and a second opening for facing the proximal end 24 of the infrared thermometer 20. The baffle 3 has an inner surface adapted to prevent reflection of infrared radiation along its inner surface onto the sensor element (not shown in this figure). In the present embodiment, the baffle 3 is made of one piece of aluminium with a black electroplated inner surface on the inside of the distal end 23 facing opening. The black electroplating serves at absorbing radiation stemming from an impact angle of more than 30 degrees.

The body portion 21 is formed ergonomically, such as to facilitate use by the operator. It might be further equipped with a roughened or rubber grip area. A display such as an LCD display is further integrated in the body portion 21, as well as operating means, such as START or STOP buttons and/or ON/OFF buttons. The body portion 21 has an accessible, closeable opening for storing batteries. Alternatively, a AC/DC plug might be available at or close to the proximal end 24 of the infrared thermometer 20, which enables either charging of the batteries or operating directly with AC/DC current.

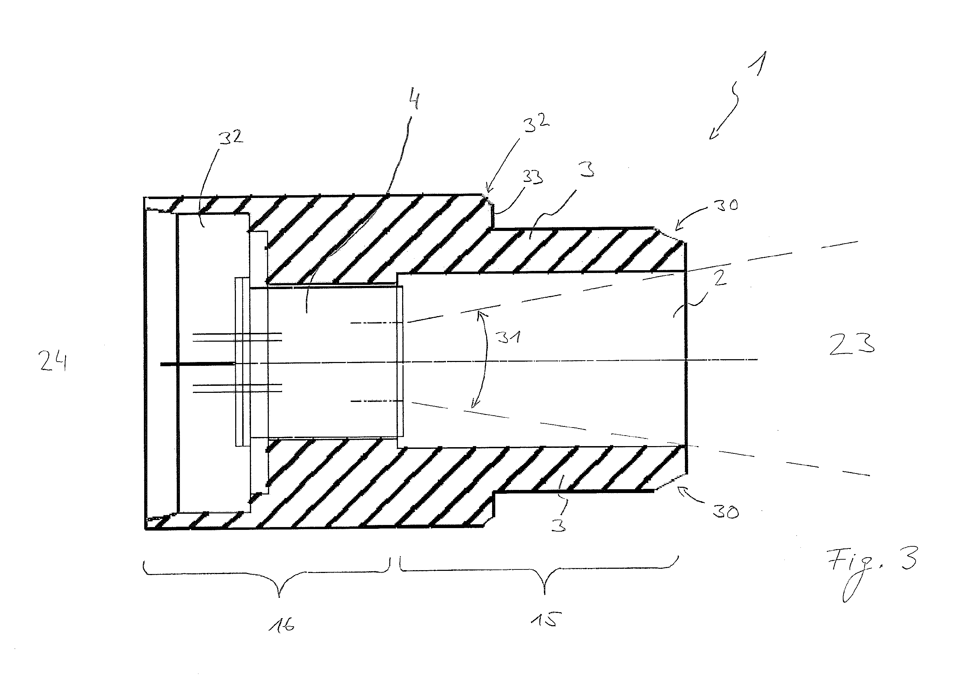

Fig. 3 shows a section view of an alternate sensor arrangement 1 within the scope of the present invention for infrared thermometers. The sensor arrangement 1 comprises a baffle 3, made of a one piece copper shaft. The baffle 3 is of an essentially cylindrical shape with two different diameters. A first diameter, at a distal end 23 of the baffle 3, has a diameter of 8 mm, whereas a second diameter, at a proximal end 24 of the baffle 3 has a Diameter of 10.5 mm. The two different diameters are separated by a shoulder 33, closer to the distal end 23, than to the proximal end 24. The shoulder 33 has a chamfered edge 32. Shoulder 33 and chamfered edge 32 extend circumferentially over the cylinder (not shown in section view).

The baffle 3 can be further partitioned by means of its internal set up into a front section 15 facing the distal end 23, which is cylindrical and houses a muzzle 2, and a back section 16, which houses the sensor elements and faces the proximal end 24 of the baffle. The front section 15 comprises the muzzle 2, which has an inner diameter of 6 mm and e length of about 8mm. The inner surface of the muzzle is electroplated in black (not shown), such as to prevent reflection of infrared radiation along the inner surface onto a sensor element. The outermost, i.e. most distal end 23, edge of the baffle 3 has chamfered outer angles 30. The inner surface of the baffle serves as heat sink.

The back section 16 of the baffle provides housing for the sensor 4, a conventionally available M21 sensor of the supplier Heimann Sensor GmbH (DE) and a fixation base 32. The fixation base 32 serves at providing a neat closure and pressing the sensor 4 against the baffle 3, thereby ensuring a temperature exchange. Sensor 4 and baffle 3 are thus thermally linked. The sensor comprises a thermistor and an infrared sensor, as well as means for converting sensed infrared radiation and sensed temperature into an electrically usable signal.

The sensor arrangement 1 and baffle 3 are 16 mm long. The sensor arrangement is adapted to have a focal point of 25 mm at a distance of 50 mm from the distal end 23 muzzle 2 opening. The baffle 3 is further adapted to allow a view angle 31 of 30 °, essentially preventing infrared radiation stemming from outside that view angle 31 of reaching the sensor 4.

Thus a precise, easy to manufacture and reliable infrared thermometer can be provided.

## Claims

1. An infrared thermometer (20), particularly an infrared thermometer (20) for measuring the temperature of a patient on the forehead, comprising:
a) a housing;
b) a sensor (4) element for sensing infrared radiation;
c) means for converting sensed infrared radiation into an electrically usable signal;
d) a baffle (3) for shielding the sensor element from undesired infrared radiation,
**characterized in that**,
said baffle (3) is of an essentially cylindrical, tubular shape with a first opening for facing the source and a second opening facing the sensor (4) element and whereby the baffle (3) has an inner surface (14) adapted to prevent reflection of infrared radiation along said inner surface (14) onto the sensor (4) element, preferably by means of a coating (14) that is adapted to absorb all or substantially all infrared radiation.

2. The infrared thermometer (20) of claim 1, **characterized in that** the baffle (3) does not include any lens closer to the first opening of the baffle (3) than to the second opening of the baffle (3).

3. The infrared thermometer (20) of any one of claims 1 or 2, **characterized in that** the baffle (3) has an inner diameter of 2 to 10 mm, preferably of 4 to 6 mm, more preferably of 5.5 mm.

4. The infrared thermometer (20) of claim 3, wherein the baffle (3) has a length of from 4 to 30 mm, preferably of from 8 to 20 mm, more preferably of about 16 mm and a front section (15) directed towards the patient has a length of from 2 to 12 mm, preferably 8 mm.

5. The infrared thermometer (20) of any one of claims 1 to 4, **characterized in that** the baffle (3) is made of metal or metal alloy.

6. The infrared thermometer (20) of any one of claims 1 to 5, **characterized in that** the sensor (4) element is thermically linked with the baffle (3).

7. The infrared thermometer (20) of any one of claims 1 to 6, **characterized in that** the housing further comprises a display means for displaying the measured temperature value.

8. The infrared thermometer (20) of any one of claims 1 to 7, **characterized in that** the baffle (3) is adapted to allow radiation from the source to reach the sensor (4) element.

9. The infrared thermometer (20) of any one of claims 1 to 8, **characterized in that** the baffle (3) has an angle (31) of aperture adapted to receive infrared radiation from an essentially smooth surface of a patient whose temperature is to be determined on a spot size of at least 5.5 mm diameter, that preferably is on the forehead of a patient.

10. The infrared thermometer (20) of any one of claims 1 to 8, **characterized in that** there is a lens (7) interdisposed between the baffle (3) and the sensor (4) element for an increased field of view.

11. Use of an infrared thermometer (20) according to claim 1 for measuring the temperature of a patient non-invasively, preferably by measuring infrared radiation from the patient's forehead.

12. Method for measuring the temperature, particularly the temperature of a patient, comprising the steps of:
a) providing a sensor element (1) for sensing infrared radiation
b) providing means (4) for converting sensed infrared radiation into an electrically usable signal
c) providing an essentially cylindrical, tubular shape baffle (3) for shielding the sensor element from undesired infrared radiation, and said baffle (3) having a first opening and a second opening, said baffle (3) further preferably having a coating (14) on said inner surface that is adapted to absorb all or substantially all infrared radiation, and
placing the first opening such as to face the source and preventing radiation not originating from said source to reach the sensor (4) element by preventing reflection of infrared radiation along the inner surface of the baffle (3) onto the sensor (4) element.
